# EUROPÄISCHE PATENTSCHRIFT

(11) **EP 3 695 697 B1**
(45) Veröffentlichungstag und Bekanntmachung des Hinweises auf die Patenterteilung: **07.06.2023**
(21) Anmeldenummer: 20164700.5
(22) Anmeldetag: 29.03.2018
(51) Int. Cl.: A01C 7/00, A01C 14/00, A01C 21/00, A01C 7/20, A01B 79/00

(54) **VERFAHREN ZUM AUSSÄHEN VON WALDSAMEN**
METHOD FOR SOWING FOREST SEEDS
PROCÉDÉ D'ENSEMENCEMENT DES SEMENCES FORESTIÈRES

(30) Priorität: 30.03.2017 DE 202017101886 U
(43) Veröffentlichungstag der Anmeldung: 19.08.2020
(62) Teilanmeldung aus: 18164868.4
(73) Patentinhaber: Schmidt, Robert, 09627 Bobritzsch (OT Sohra) (DE)
(72) Erfinder: Schmidt, Robert, 09627 Bobritzsch (OT Sohra) (DE)
(74) Vertreter: Hauck Patentanwaltspartnerschaft mbB

(56) Entgegenhaltungen:
- EP-A1- 2 104 413
- WO-A1-2013/135971
- US-A- 3 605 908
- US-A- 5 944 115
- US-A1- 2003 145 770
- US-A1- 2017 055 433
- US-B1- 6 386 128

## Beschreibung

Die Erfindung betrifft ein Verfahren zum Aussähen von Waldsamen mit einer bewegbaren Saatmaschine.

Für die Aussaat von Waldsamen bekannt sind motorgetriebene oder manuell und mit Hilfe von Zugtieren durch den Wald bewegte Saatmaschinen. Die EP 2 781 145 B1 beschreibt ein Scheibenräumgerät und Verfahren zur Herstellung von Saatstreifen für die Waldsaat von Nadelbaumarten. Die EP 2 944 176 beschreibt ein Waldsägerät und ein Verfahren zum Aussähen von Laubbaumarten. Bei der Aussaat mittels herkömmlicher Saatmaschinen wird die Lage der zu bearbeitenden Arbeitsfläche von der Bedienperson ermittelt und die Bearbeitung der Arbeitsflächen an die vor Ort vorliegenden Bedingungen angepasst. Dies ist anspruchsvoll, begrenzt die Saatleistung und kann zu Fehlern führen, indem das Saatgut auf falschen oder ungeeigneten Flächen ausgebracht wird. Ferner ist im Falle einer Beauftragung oder einer Lizenz zur Aussaat von Waldsamen der genauere Nachweis der erbrachten Leistung erschwert.

Die US 2003/145770 A1 beschreibt ein motorgetriebenes Waldarbeitsgerät mit einem Harvesterkopf an einem Ausleger und einem Gelenkarm mit einem Saatgerät am Heck. Ein Waldbereich wird mittels des Harvesters aufgerissen und mittels des Saatgerätes werden darin Samen oder Setzlinge auf der überfahrenen Arbeitsfläche ausgebracht.

Die WO 2013/135971 A1 beschreibt eine Maschine zum Aufreißen des Waldbodens und Aussäen, die an das Heck eines Forwarders oder einer anderen Arbeitsmaschine angebaut ist. Beim Ausbringen der Waldsaat überfährt die Arbeitsmaschine die Arbeitsfläche.

Davon ausgehend liegt der Erfindung die Aufgabe zugrunde, ein Verfahren zum Aussähen von Waldsamen mit einer bewegbaren Saatmaschine zu schaffen, das eine nachteilige Bodenverdichtung vermeidet, eine erhöhte Arbeitsgeschwindigkeit ermöglicht und die Vorbereitung von unwegsamem, steilem und/oder ungeräumtem Gelände für die Keimung von Sämlingen ermöglicht.

Die Aufgabe wird durch ein Verfahren mit den Merkmalen von Anspruch 1 gelöst.

Vorteilhafte Ausgestaltungen der Verfahren sind in Unteransprüchen angegeben.

Das Verfahren zum Aussähen von Waldsamen umfasst ein motorgetriebenes Arbeitsgerät mit einem Greifwerkzeug und/oder einer Schnittstelle für ein Anbaugerät und ein Saataggregat oder Saatgerät, das ausgebildet ist, in Anbaustellung von dem Greifwerkzeug gegriffen zu werden und/oder mit der Schnittstelle verbunden zu sein.

Eine Vorrichtung ist auf einfache Weise durch Verbinden eines Saataggregates oder Saatgerätes mit einem motorgetriebenen Arbeitsgerät zusammenstellbar. Bei dem motorgetriebenen Arbeitsgerät kann es sich um ein herkömmliches Arbeitsgerät handeln, das ohnehin in einem Forstbetrieb oder dergleichen vorhanden ist. Gemäß einer Ausführungsart handelt es sich bei dem motorgetriebenen Arbeitsgerät um eine Forstmaschine (Waldmaschine), einen Minibagger oder anderen Bagger oder einen Kran.

Vorteilhafte Ausführungsarten des Verfahrens sind in Unteransprüchen und nachfolgend angegeben.

Die Verbindung des Saataggregates oder Saatgerätes mit dem motorgetriebenen Arbeitsgerät wird auf einfache Weise dadurch hergestellt, dass es von einem Greifwerkzeug des selbstfahrenden Arbeitsgerätes gegriffen oder mit einer Schnittstelle für ein Anbaugerät des motorgetriebenen Arbeitsgerätes verbunden wird.

Bei der Schnittstelle kann es sich um eine standardisierte Schnittstelle handeln, die auch für andere Arbeitsgeräte nutzbar ist. Gemäß einer weiteren Ausführungsart umfasst die Schnittstelle Einrichtungen zum Fixieren des Anbaugerätes am Arbeitsgerät, insbesondere an einem Ausleger des Arbeitsgerätes. Gemäß einer weiteren Ausführungsart umfasst sie Einrichtungen zum Übertragen einer Axialbewegung, einer Drehbewegung oder einer anderen Bewegung vom Arbeitsgerät auf das Anbaugerät. Diese Einrichtungen können zum Antreiben von Scheiben und/oder eines Dosiergerätes für Saatgut des Saataggregates oder Saatgerätes benutzt werden. Gemäß einer anderen Ausführungsart werden die Scheiben gedreht, indem das Saataggregat oder Saatgerät mittels des Arbeitsgerätes auf dem Waldboden verlagert wird, wobei die Scheiben abrollen. Hierbei kann ein auf dem Saataggregat oder Saatgerät angeordnetes Dosiergerät von den Scheiben angetrieben werden.

Gemäß einer weiteren Ausführungsart umfasst die Vorrichtung einen Adapter, der ausgebildet ist, das Saatgerät oder Saataggregat mit dem Greifwerkzeug und/oder mit der Schnittstelle zu verbinden.

Für die Verbindung bzw. das Aufnehmen des Saataggregates oder Saatgerätes von einem Greifwerkzeug hat gemäß einer weiteren Ausführungsart das Saataggregat oder Saatgerät eine Außenoberfläche, die komplementär zu der Innenoberfläche des Greifwerkzeugs in einer Stellung ausgebildet ist, die dieses beim Greifen eines Gegenstandes annimmt. Gemäß einer weiteren Ausführungsart handelt es sich bei dem Greifwerkzeug um einen Zweischalengreifer oder um einen Mehrschalengreifer, der schalenförmige Greifelemente aufweist, die um horizontale Achsen aus einer geöffneten Stellung in einer mehr oder weniger geschlossenen Stellung schwenkbar sind. Gemäß einer weiteren Ausführungsart ist die Außenoberfläche des Saataggregates oder Saatgerätes so ausgebildet, dass sie komplementär zu der Innenoberfläche der Greifelemente des Greifwerkzeugs in zumindest teilweise zusammengeschwenkter Stellung ist. Somit liegt das Greifwerkzeug mit den Greifelementen eng und flächig anliegend an Saataggregat oder Saatgerät an, sodass das Greifwerkzeug das Saataggregat oder Saatgerät mehr oder weniger spielfrei halten und führen kann.

Das Greifwerkzeug oder die Schnittstelle ist am Ende eines Auslegers des Arbeitsgerätes angeordnet. Gemäß einer weiteren Ausführungsart ist der Ausleger ein Knickarm oder ein Teleskoparm. Hierfür können herkömmliche Arbeitsgeräte mit Auslegern verwendet werden. Durch Bewegen des Auslegers wird das Arbeitsgerät des Saataggregat oder Saatgerät entlang einer Saatstrecke verlagert. Hierbei steht das Arbeitsgerät auf einer vorgegebenen Fahrspur oder wird entlang einer vorgegebenen Fahrspur verfahren und Arbeitsflächen in einem größeren Bereich neben der Fahrspur bearbeitet. Derartige Fahrspuren (z.B. Rückegassen) sind im Forst vielfach mit einem Abstand von 40 m oder 20 m angelegt. Durch Verlagern des Saatgerätes oder Saataggregates von den Fahrspuren aus können hohe Arbeitsgeschwindigkeiten erreicht und unwegsames oder steiles Gelände bearbeitet werden. Zudem wird hierdurch Bodenverdichtung vermieden.

Gemäß einer weiteren Ausführungsart weist das Arbeitsgerät oder das Saataggregat oder Saatgerät eine Tiefenbegrenzung zum Begrenzen der Eindringtiefe des Saatstreifens oder der Saatrille in den Boden auf. Gemäß einer weiteren Ausführungsart ist die Tiefenbegrenzung ein mit einem Ausleger oder einem Greifwerkzeug oder einem Saataggregat oder Saataggregat gekoppelte Rolleneinrichtung, die die Eindringtiefe des Saataggregats oder Saatgeräts in den Waldboden begrenzt. Gemäß einer weiteren Ausführungsart ist die Tiefenbegrenzung mit dem Saatgerät oder Saataggregat fest verbunden.

Gemäß einer weiteren Ausführungsart umfasst die Tiefenbegrenzung mindestens einen Sensor, der ausgebildet ist, den Abstand des Sensors von der Bodenoberfläche zu erfassen, eine mit dem Sensor verbundene Steuerungseinrichtung und eine mit der Steuerungseinrichtung verbundene Stelleinrichtung, die ausgebildet ist, die Lage des Saatgeräts oder des Saataggregats relativ zur Bodenoberfläche auf einen vorgegebenen Wert einzustellen.

Ein Saatgerät ist ein bewegliches Werkzeug oder Hilfsmittel zum Aussäen von Waldsamen. Ein Saataggregat ist eine Einheit aus mehreren zusammenwirkenden Saatgeräten.

Gemäß einer weiteren Ausführungsart ist das motorgetriebene Arbeitsgerät ein durch mindestens einen Verbrennungsmotor und/oder mindestens einen Elektromotor angetriebenes Arbeitsgerät.

Gemäß einer weiteren Ausführungsart ist das Arbeitsgerät mit mindestens einem angebauten Saatgerät ein selbstfahrendes (z.B. ferngesteuertes) oder autonom fahrendes (selbständig fahrendes) Fahrzeug.

Gemäß einer weiteren Ausführungsart fährt das Arbeitsgerät auf Rädern oder auf Raupen, d.h. ist ein Räderfahrzeug oder ein Kettenfahrzeug.

Die Erfindung wird nachfolgend anhand der anliegenden Zeichnungen von Ausführungsbeispielen näher erläutert.

In den Zeichnungen zeigen:
- Fig. 1: einen Raupenbagger mit Mehrarmgreifer und Scheibenräumgerät zum Herstellen von Saatstreifen in einer Perspektivansicht von vorn und von der Seite;
- Fig. 2: einen weiteren Raupenbagger mit Mehrarmgreifer und Scheibenräumgerät in einer Ansicht von der Seite;
- Fig. 3: einen weiteren Raupenbagger mit Mehrarmgreifer und Waldsägerät mit gezahnten Scheiben in einer Perspektivansicht von vorn und von der Seite;
- Fig. 4: ein autonom fahrendes Waldarbeitsgerät mit Scheibenräumgerät in einer Perspektivansicht von vorn und von der Seite;
- Fig. 5: eine Forstmaschine mit Mehrarmgreifer und Scheibenräumgerät in einer Ansicht von vorn und von der Seite;
- Fig. 6: dieselbe Forstmaschine mit Waldsägerät mit gezahnten Scheiben in einer Perspektivansicht von vorn und von der Seite;
- Fig. 7: Bearbeitungsschema bei der Durchführung von Waldsaaten ausgehend von einer Fahrspur in der Draufsicht.

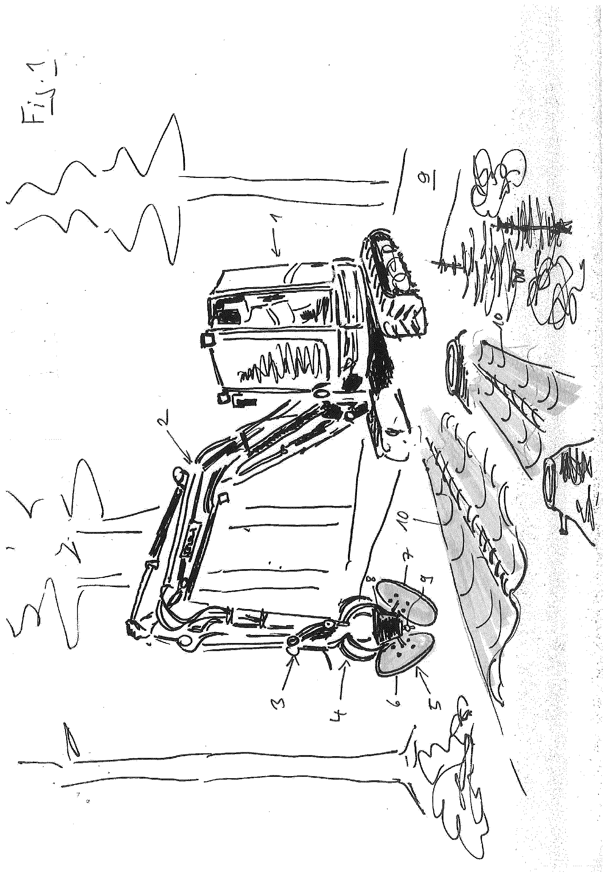

Gemäß Fig. 1 hat ein Raupenbagger 1 am Ende eines Auslegers 2 in Form eines Knickarmes eine Schnittstelle 3 für ein Anbaugerät. An der Schnittstelle 3 ist ein Greifwerkzeug 4 in Form eines Mehrarmgreifers montiert.

Das Greifwerkzeug 4 greift ein Scheibenräumgerät 5 zur Herstellung von Saatstreifen für die Waldsaat von Nadelbaumarten.

Das Scheibenräumgerät weist eine Anordnung von Scheiben 6, 7, einen Vorratsbehälter 8 und eine Dosiervorrichtung 9 für Saatgut auf, wie in der EP 2 781 145 B1 beschrieben. Im Unterschied zu dem darin beschriebenen Scheibenräumgerät weist das Scheibenräumgerät 5 jedoch nur einen kompakten Geräteträger in Form eines kurzen ersten Profilträgers auf, an dem die Drehachsen gehalten sind, welche die beiden Scheiben 6, 7 lagern. Außerdem weist das Scheibenräumgerät 5 keine zusätzliche Stützachse auf.

Zentral zwischen den beiden Scheiben sitzt der Vorratsbehälter 8. Die Außenoberfläche des Vorratsbehälters ist vorzugsweise so geformt, dass sie überall an der Innenoberfläche des Mehrarmgreifers in einem teilweise geschlossenem Greifzustand anliegt. Infolgedessen kann der Scheibenräumer 5 einfach durch teilweises Schließen des Greifwerkzeugs 4 um den Vorratsbehälter herum gekoppelt werden.

Ausgehend von einer Fahrspur 9 ist der Ausleger 2 manövrierbar, sodass das Scheibenräumgerät 5 beidseitig der Fahrspur 9 Saatstrecken 10 bearbeitet.

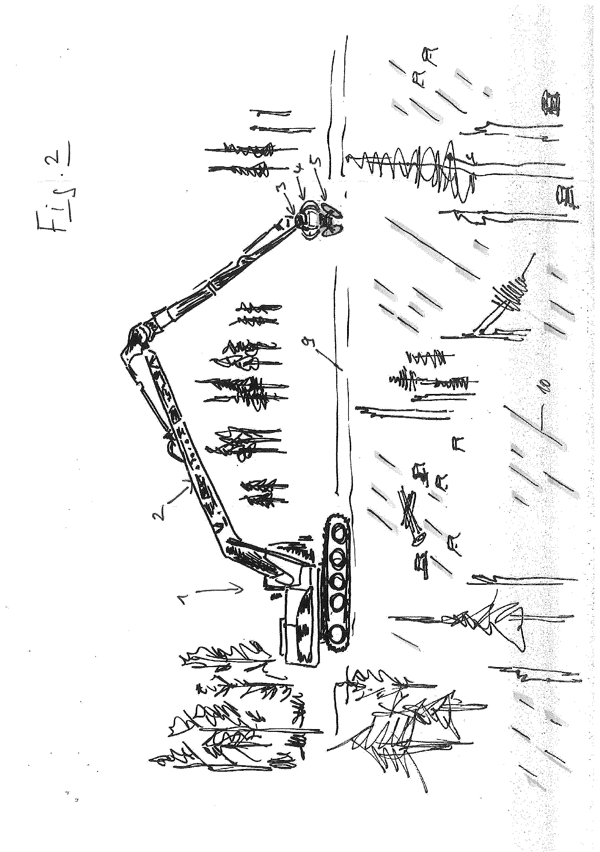

Gemäß Fig. 2 kann ein Raupenbagger 1 mit einem längeren Ausleger 2 beidseitig der Fahrspur 9 größere Bereiche mit Saatstrecken 10 versehen, u.a. Böschungen und Hänge.

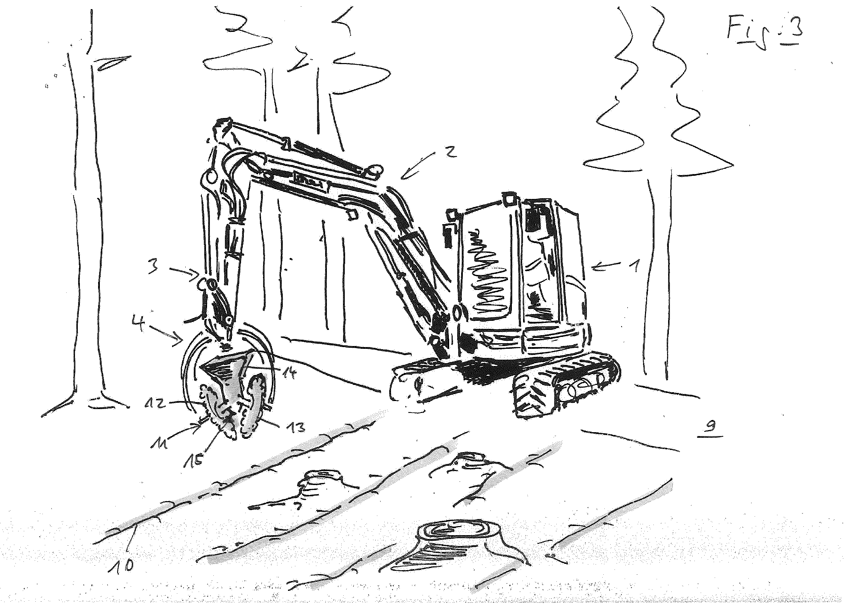

Gemäß Fig. 3 ist der Raupenbagger 1 mit einem Waldsägerät 11 zur Aussaat schwerfrüchtiger Laubbaumarten gekoppelt, das im Wesentlichen gemäß EP 2 944 176 B1 ausgebildet ist. Im Unterschied zu dem darin beschriebenen Waldsägerät sind die Lagerwellen der gezahnten Scheiben 12, 13 an einem kompakten Geräteträger gelagert, der auch einen Vorratsbehälter 14 für Saatgut und eine Dosiervorrichtung 15 trägt. Das Waldsägerät 11 weist keinen Schutzrahmen, keine Halterung für Zusatzgewichte und auch keinen Griff für die Manipulation des Gerätes im Gelände auf.

Die Außenoberfläche des Vorratsbehälters 14 ist wiederum so ausgebildet, dass dieser von dem Greifwerkzeug 4 gut gegriffen werden kann.

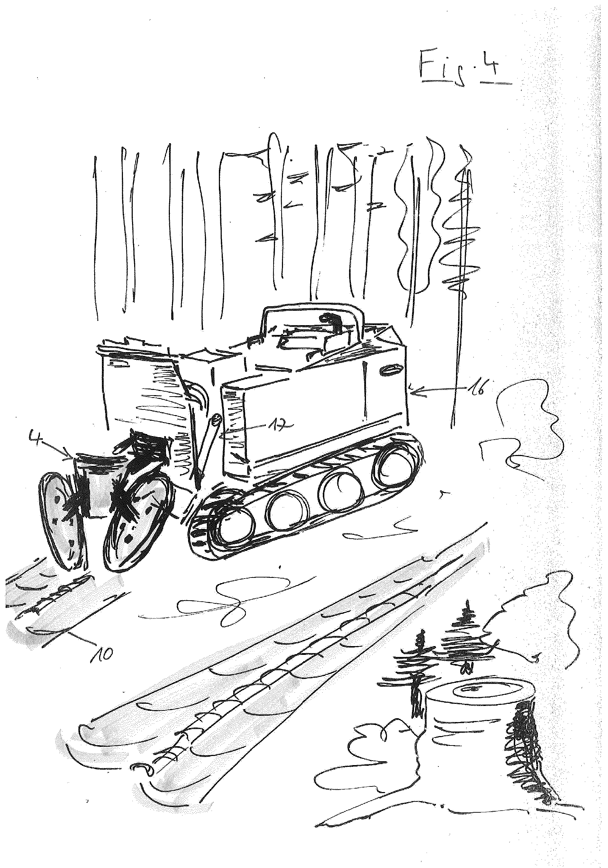

Gemäß Fig. 4 ist ein autonom fahrendes Waldarbeitsgerät 16 an einer Schnittstelle 17, die auch zur Aufnahme eines Fräsgerätes oder eines Räumgerätes dienen kann, mit einem Scheibenräumgerät 4 bestückt. Das Scheibenräumgerät 4 hat eine Schnittstelle, die komplementär zu der Schnittstelle des Waldarbeitsgerätes 16 ausgebildet ist, um mit diesem verbunden zu werden.

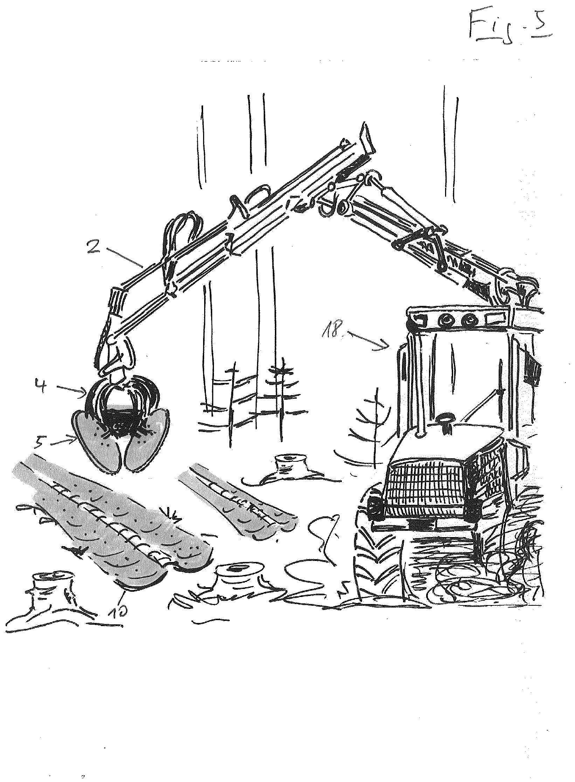

Gemäß Fig. 5 ist wiederum eine Forstmaschine 18 mit einem Greifwerkzeug an einem Ausleger 2 mit einem Scheibenräumgerät 5 gekoppelt.

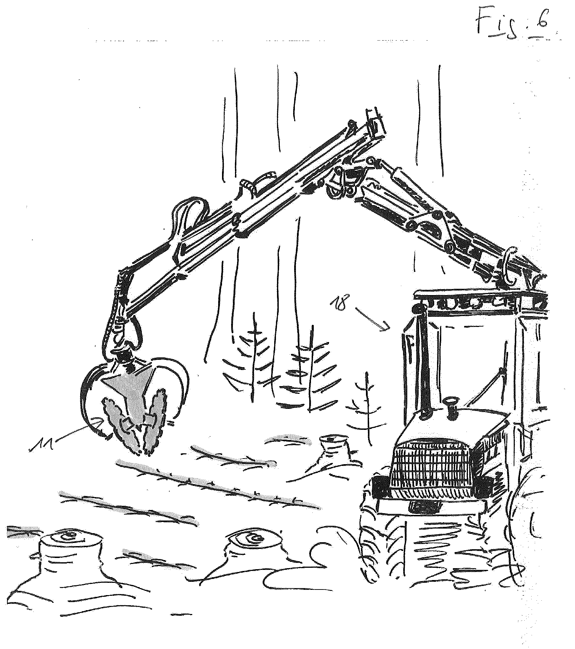

Gemäß Fig. 6 ist die Forstmaschine 18 mit dem Waldsägerät 11 gekoppelt.

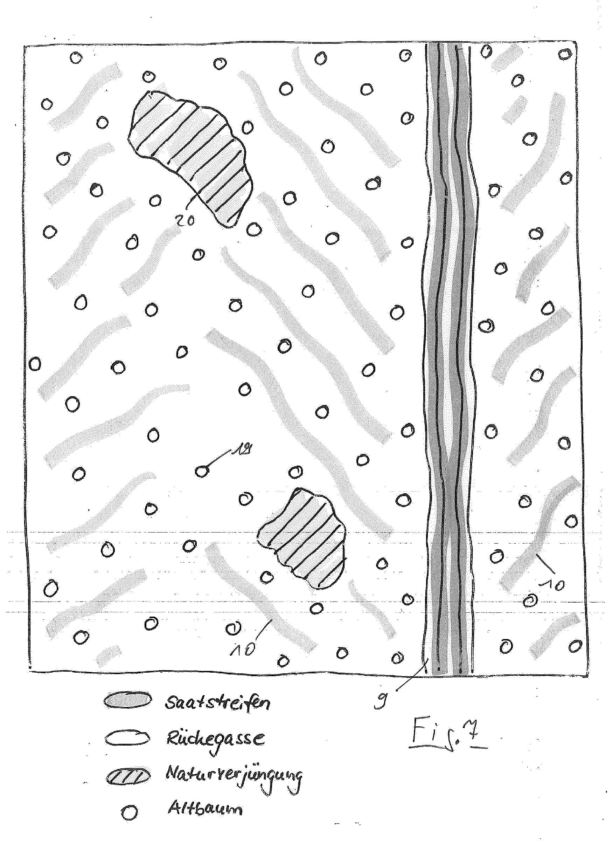

Gemäß Fig. 7 wird mittels der Vorrichtung gemäß Fig. 1 bis 6. ausgehend von einem Fahrweg 9 beidseitig Saatstrecken 10 in den Waldboden eingebracht. Das Einbringen ist an die Gegebenheiten vor Ort angepasst, insbesondere Altbaumbestand 19 oder Naturverjüngung 20.

## Patentansprüche

1. Verfahren zum Aussähen von Waldsamen mittels eines motorgetriebenen Arbeitsgerätes mit einem Greifwerkzeug und/oder einer Schnittstelle für ein Anbaugerät und ein Saataggregat oder Saatgerät, das ausgebildet ist, in Anbaustellung von dem Greifwerkzeug gegriffen zu werden und/oder mit der Schnittstelle verbunden zu sein, bei der das Greifwerkzeug oder die Schnittstelle am Ende eines Auslegers des Arbeitsgerätes angeordnet ist, bei dem das Arbeitsgerät das Saataggregat oder Saatgerät durch Bewegen des Auslegers entlang einer Saatstrecke verlagert, wobei das Arbeitsgerät auf einer vorgegebenen Fahrspur steht oder entlang einer vorgegebenen Fahrspur verfahren wird und Arbeitsflächen in einem größeren Bereich neben der Fahrspur bearbeitet.

2. Verfahren zum Aussähen von Waldsamen nach Anspruch 1, wobei das motorgetriebene Arbeitsgerät ein ferngesteuertes selbstfahrendes oder ein autonom fahrendes Fahrzeug ist.

3. Verfahren nach Anspruch 1 oder 2, bei der das Arbeitsgerät ein Räderfahrzeug oder ein Kettenfahrzeug ist.

4. Verfahren nach einem der Ansprüche 1 bis 3, bei der das motorgetriebene Arbeitsgerät eine Forstmaschine, insbesondere eine Waldmaschine, ein Minibagger, ein Bagger oder ein Kran ist.

5. Verfahren nach einem der Ansprüche 2 bis 4, bei der eine Verbindung des Saataggregates oder Saatgerätes mit dem motorgetriebenen Arbeitsgerät dadurch hergestellt wird, dass es von dem Greifwerkzeug des motorgetriebenen Arbeitsgerätes gegriffen oder mit einer Schnittstelle für ein Anbaugerät des motorgetriebenen Arbeitsgerätes verbunden wird.

6. Verfahren nach einem der Ansprüche 1 bis 5, bei der die Schnittstelle Einrichtungen zum Fixieren des Anbaugerätes an einem Ausleger des Arbeitsgerätes umfasst.

7. Verfahren nach einem der Ansprüche 1 bis 6, bei der die Schnittstelle Einrichtungen zum Übertragen einer Axialbewegung, einer Drehbewegung oder einer anderen Bewegung vom Arbeitsgerät auf das Anbaugerät umfasst.

8. Verfahren nach Anspruch 7, bei der die Einrichtungen zum Übertragen zum Antreiben eines Dosiergerätes für Saatgut des Saataggregates oder Saatgerätes benutzt werden.

9. Verfahren nach Anspruch 7 oder 8, bei der die Einrichtungen zum Übertragen zum Antreiben von Scheiben benutzt werden.

10. Verfahren nach einem der Ansprüche 1 bis 9, bei der Scheiben des Saataggregates oder Saatgerätes gedreht werden, indem das Saataggregat oder Saatgerät mittels des Arbeitsgerätes auf dem Waldboden verlagert wird, wobei die Scheiben abrollen.

11. Verfahren nach Anspruch 10, bei dem ein auf dem Saataggregat oder Saatgerät angeordnetes Dosiergerät von den Scheiben angetrieben wird.

12. Verfahren nach einem der Ansprüche 1 bis 11, die einen Adapter umfasst, der ausgebildet ist, das Saatgerät oder Saataggregat mit dem Greifwerkzeug und/oder mit der Schnittstelle zu verbinden.

13. Verfahren nach einem der Ansprüche 1 bis 12, bei der das Saataggregat oder Saatgerät für eine Verbindung bzw. ein Aufnehmen des Saataggregates oder Saatgerätes von einem Greifwerkzeug eine Außenoberfläche hat, die komplementär zu einer Innenoberfläche des Greifwerkzeugs in einer Stellung ausgebildet ist, die dieses beim Greifen eines Gegenstandes annimmt.

14. Verfahren nach einem der Ansprüche 1 bis 13, bei der das Greifwerkzeug ein Zweischalengreifer oder ein Mehrschalengreifer ist, der schalenförmige Greifelemente aufweist, die um horizontale Achsen aus einer geöffneten Stellung in einer mehr oder weniger geschlossenen Stellung schwenkbar sind.

15. Verfahren nach Anspruch 13 oder Anspruch 13 und Anspruch 14, bei der die Außenoberfläche des Saataggregates oder Saatgerätes so ausgebildet ist, dass sie komplementär zu der Innenoberfläche der Greifelemente des Greifwerkzeugs in zumindest teilweise zusammengeschwenkter Stellung ist.

16. Verfahren nach einem der Ansprüche 1 bis 15, bei der der Ausleger ein Knickarm oder ein Teleskoparm ist.

17. Verfahren nach einem der Ansprüche 1 bis 16, bei der das Arbeitsgerät oder das Saataggregat oder Saatgerät eine Tiefenbegrenzung zum Begrenzen der Eindringtiefe des Saatstreifens oder der Saatrille in den Boden aufweist.

18. Verfahren nach Anspruch 17, bei der die Tiefenbegrenzung mindestens einen Sensor, der ausgebildet ist, den Abstand des Sensors von der Bodenoberfläche zu erfassen, eine mit dem Sensor verbundene Steuerungseinrichtung und eine mit der Steuerungseinrichtung verbundene Stelleinrichtung umfasst, die ausgebildet ist, die Lage des Saatgeräts oder des Saataggregats relativ zur Bodenoberfläche auf einen vorgegebenen Wert einzustellen.

## Claims

1. A method for sowing forest seeds by means of a motor-driven work machine with a gripping tool and/or an interface for a planting device and a sowing assembly or sowing device, which is designed to be gripped by the gripping tool and/or to be connected to the interface in a planting position, in which the gripping tool or the interface is arranged on the end of a boom of the work machine, in which the work machine displaces the sowing assembly or sowing device along a sowing path by moving the boom, wherein the work machine is on a specified lane or is driven along a specified lane and processes work areas in a larger region next to the lane.

2. The method for sowing forest seeds according to claim 1, wherein the motor-driven work machine is a remote-controlled self-driving or an autonomously driving vehicle.

3. The method according to claim 1 or 2, in which the work machine is a wheeled vehicle or a tracked vehicle.

4. The method according to one of claims 1 to 3, in which the motor-driven work machine is a forestry machine, in particular a forest machine, a mini-excavator, an excavator, or a crane.

5. The method according to one of claims 2 to 4, in which a connection of the sowing assembly or sowing device to the motor-driven work machine is established in that it is gripped by the gripping tool of the motor-driven work machine or is connected to an interface for a planting device of the motor-driven work machine.

6. The method according to one of claims 1 to 5, in which the interface comprises apparatuses for fixing the planting device to a boom of the work machine.

7. The method according to one of claims 1 to 6, in which the interface comprises apparatuses for transmitting an axial movement, a rotary movement, or another movement from the work machine to the planting device.

8. The method according to claim 7, in which the apparatuses for transmitting are used to drive a metering device for seeds of the sowing assembly or sowing device.

9. The method according to claim 7 or 8, in which the apparatuses for transmitting are used to drive disks.

10. The method according to one of claims 1 to 9, in which disks of the sowing assembly or sowing device are rotated in that the sowing assembly or sowing device is displaced on the forest floor by means of the work machine, wherein the disks roll.

11. The method according to claim 10, in which a metering device arranged on the sowing assembly or sowing device is driven by the disks.

12. The method according to one of claims 1 to 11, which comprises an adapter which is designed to connect the sowing device or sowing assembly to the gripping tool and/or to the interface.

13. The method according to one of claims 1 to 12, in which the sowing assembly or sowing device has an outer surface for connecting or, respectively, receiving the sowing assembly or sowing device by a gripping tool, which outer surface is designed to be complementary to an inner surface of the gripping tool in a position that the tool assumes when gripping an object.

14. The method according to one of claims 1 to 13, in which the gripping tool is a two-shell gripper or a multi-shell gripper having shell-shaped gripping elements which can be pivoted about horizontal axes from an opened position into a more or less closed position.

15. The method according to claim 13 or claim 13 and 14, in which the outer surface of the sowing assembly or sowing device is designed such that it is complementary to the inner surface of the gripping elements of the gripping tool in a position that is at least partially pivoted together.

16. The method according to one of claims 1 to 15, in which the boom is an articulated arm or a telescopic arm.

17. The method according to one of claims 1 to 16, in which the work machine or the sowing assembly or sowing device has a depth limitation for limiting the penetration depth of the sowing groove or the sowing furrow into the ground.

18. The method according to claim 17, in which the depth limitation comprises at least one sensor, which is designed to detect the distance of the sensor from the surface of the ground, a control apparatus connected to the sensor, and a setting apparatus connected to the control apparatus, which is designed to set the position of the sowing device or the sowing assembly relative to the surface of the ground to a specified value.

## Revendications

1. Procédé d'ensemencement de semences forestières au moyen d'un engin entraîné par moteur avec un outil de préhension et/ou une interface pour un appareil de plantation et un agrégat de semis ou un appareil de semis, lequel est conçu pour être saisi par l'outil de préhension et/ou pour être relié à l'interface dans la position de plantation, l'outil de préhension ou l'interface étant disposé(e) à l'extrémité d'un bras de l'engin, dans lequel l'engin déplace l'agrégat de semis ou l'appareil de semis par déplacement du bras le long d'un trajet de semis, dans lequel l'engin est placé sur une voie de déplacement prédéfinie ou déplacé le long d'une voie de déplacement prédéfinie et traite des surfaces de travail sur une grande zone adjacente à la voie de déplacement.

2. Procédé d'ensemencement de semences forestières selon la revendication 1,
dans lequel l'engin entraîné par moteur est un véhicule télécommandé automoteur ou un véhicule à conduite autonome.

3. Procédé selon la revendication 1 ou 2, dans lequel l'engin est un véhicule sur roues ou un véhicule chenillé.

4. Procédé selon l'une des revendications 1 à 3, dans lequel l'engin entraîné par moteur est une machine forestière, en particulier une machine agricole, une mini-pelleteuse, une pelleteuse ou une grue.

5. Procédé selon l'une des revendications 2 à 4, dans lequel un assemblage entre l'agrégat de semis ou l'appareil de semis et l'engin entraîné par moteur est réalisée par préhension par l'outil de préhension de l'engin entraîné par moteur ou par assemblage avec une interface pour un appareil de plantation de l'engin entraîné par moteur.

6. Procédé selon l'une des revendications 1 à 5, dans lequel l'interface comporte des moyens pour la fixation de l'appareil de plantation à un bras de l'engin.

7. Procédé selon l'une des revendications 1 à 6, dans lequel l'interface comporte des moyens pour la transmission d'un mouvement axial, un mouvement rotatif ou un autre mouvement de l'engin à l'appareil de plantation.

8. Procédé selon la revendication 7, dans lequel les moyens pour la transmission sont utilisés pour l'actionnement d'un appareil de dosage pour des semences de l'agrégat de semis ou de l'appareil de semis.

9. Procédé selon la revendication 7 ou 8, dans lequel les moyens pour la transmission sont utilisés pour l'actionnement de disques.

10. Procédé selon l'une des revendications 1 à 9, dans lequel les disques de l'agrégat de semis ou de l'appareil de semis sont mis en rotation en déplaçant l'agrégat de semis ou l'appareil de semis au moyen de l'engin sur le sol forestier, entraînant le roulement des disques.

11. Procédé selon la revendication 10, dans lequel un appareil de dosage disposé sur l'agrégat de semis ou l'appareil de semis est actionné par les disques.

12. Procédé selon l'une des revendications 1 à 11, comportant un adaptateur conçu pour raccorder l'agrégat de semis ou l'appareil de semis à l'outil de préhension et/ou à l'interface.

13. Procédé selon l'une des revendications 1 à 12, dans lequel, pour un assemblage de l'agrégat de semis ou de l'appareil de semis ou la réception de celui-ci par un outil de préhension, l'agrégat de semis ou l'appareil de semis possède une surface extérieure complémentaire à une surface intérieure de l'outil de préhension dans une position adoptée par celui-ci pour saisir un objet.

14. Procédé selon l'une des revendications 1 à 13, dans lequel l'outil de préhension est une benne preneuse ou un grappin multicoque présentant des éléments de préhension en forme de coques, lesquels peuvent pivoter autour d'axes horizontaux hors d'une position ouverte vers une position plus ou moins fermée.

15. Procédé selon la revendication 13 ou selon la revendication 13 et la revendication 14, dans lequel la surface extérieure de l'agrégat de semis ou de l'appareil de semis est conçue de manière à être complémentaire à la surface intérieure des éléments de préhension de l'outil de préhension dans une position au moins partiellement repliée par pivotement.

16. Procédé selon l'une des revendications 1 à 15, dans lequel le bras est un bras articulé ou un bras télescopique.

17. Procédé selon l'une des revendications 1 à 16, dans lequel l'engin ou l'agrégat de semis ou l'appareil de semis présente un moyen de limitation de la profondeur permettant de limiter la profondeur d'insertion de la bande de semis ou du sillon de semis dans le sol.

18. Procédé selon la revendication 17, dans lequel le moyen de limitation de la profondeur comporte au moins un capteur conçu pour détecter la distance entre le capteur et la surface du sol, un dispositif de commande raccordé au capteur et un dispositif de réglage raccordé au dispositif de commande, lequel est conçu pour régler l'emplacement de l'appareil de semis ou de l'agrégat de semis par rapport à la surface du sol sur une valeur prédéfinie.
